(19) Europäisches Patentamt / European Patent Office / Office européen des brevets

(11) **EP 3 276 820 B1**

(12) **EUROPEAN PATENT SPECIFICATION**

(45) Date of publication and mention of the grant of the patent:
**11.05.2022  Bulletin 2022/19**

(21) Application number: **16768153.5**

(22) Date of filing: **01.02.2016**

(51) International Patent Classification (IPC):
*H02P 27/08* *(2006.01)*

(52) Cooperative Patent Classification (CPC):
**H02P 27/08; H02P 29/50**

(86) International application number:
**PCT/JP2016/052854**

(87) International publication number:
**WO 2016/152250 (29.09.2016 Gazette 2016/39)**

(54) **MOTOR CONTROL DEVICE**

MOTORSTEUERUNGSVORRICHTUNG

DISPOSITIF DE COMMANDE DE MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **24.03.2015   JP 2015060305**

(43) Date of publication of application:
**31.01.2018   Bulletin 2018/05**

(73) Proprietor: **Hitachi Industrial Equipment Systems Co., Ltd.**
**Chiyoda-ku**
**Tokyo 101-0022 (JP)**

(72) Inventors:
• **TAKAOKA Midori**
**Tokyo 100-8280 (JP)**
• **SUMITA Satoshi**
**Tokyo 100-8280 (JP)**
• **TOBARI Kazuaki**
**Tokyo 100-8280 (JP)**
• **IWAJI Yoshitaka**
**Tokyo 100-8280 (JP)**

(74) Representative: **Mewburn Ellis LLP**
**Aurora Building**
**Counterslip**
**Bristol BS1 6BX (GB)**

(56) References cited:
**WO-A1-2011/135695      WO-A1-2013/118318**
**JP-A- 2007 143 316      JP-A- 2012 120 296**
**JP-A- 2014 072 935      JP-B1- 5 615 468**

**Description**

TECHNICAL FIELD

The present invention relates to a motor control device and a drive system for reducing a harmonic loss.

BACKGROUND ART

A reduction in various losses is desired in a motor drive system according to PWM control using an inverter. Losses are divided into a loss generated in a motor (hereinafter referred to a motor loss) and a loss generated in an inverter (hereinafter referred to as an inverter loss). Examples of the motor loss include a loss resulting from a fundamental wave component (hereinafter a fundamental loss) and a loss resulting from a harmonic element (hereinafter a harmonic loss). Examples of the inverter loss include a loss resulting from ON/OFF operation of a switching element (hereinafter switching loss) and a loss generated during conduction of the switching element (hereinafter a conduction loss).

The fundamental loss is reduced by adopting variable speed drive by the inverter when compared to constant speed drive by a commercial power supply. However, a voltage/current is distorted by switching operation, and a harmonic element is generated. Thus, a harmonic loss increases. The harmonic element and the harmonic loss may be reduced by improving a carrier frequency of the inverter. However, at the same time, the switching loss increases. Thus, it is desirable to reduce the harmonic loss while keeping the carrier frequency fixed. In particular, it has been known that the harmonic element and the harmonic loss remarkably increase in overmodulation drive of asynchronous PWM control, and a reduction thereof is desired.

In Patent Document 1, in overmodulation drive of asynchronous PWM control, in order to reduce the harmonic element, an upper limit $K_{Hmax}$ of modulation is set, and a signal wave is corrected such that the modulation is smaller than the upper limit $K_{Hmax}$.

In this way, an effective value of the harmonic element is reduced, and the harmonic loss is reduced.

WO 2011/135695 A1 discloses a power conversion device for a motor with a sine wave PWM control mode, the system having a signal wave generator, a carrier wave generator, a PWM generator and an inverter.

JP 2007 143316 A discloses a motor controller for reducing low frequency distortion components of PWM output voltages by correcting the modulation rates of voltages.

JP 5 615468 B1 discloses a power conversion device for convering three-phase AC power into DC power by two-arm PWM modulation control.

CITATION LIST

PATENT DOCUMENT

Patent Document 1: JP 2007-143316 A

SUMMARY OF THE INVENTION

PROBLEMS TO BE SOLVED BY THE INVENTION

However, problems of Patent Document 1 are (1) a range of an inverter output is restricted since an upper limit of modulation is set, and (2) frequency dependence of a harmonic loss is not considered, and the harmonic loss may not be sufficiently reduced. The frequency dependence of the harmonic loss means that a generation amount of the harmonic loss depends not only on a harmonic effective value but also on a frequency. In other words, the harmonic loss may not be reduced merely by reducing the harmonic effective value. A frequency band of the harmonic element needs to be optimized by taking the frequency dependence into consideration to sufficiently reduce the harmonic loss.

In this regard, an object of the invention is to reduce a harmonic loss generated when an alternating current (AC) motor is overmodulation-driven using asynchronous PWM control without increasing the number of times of switching.

SOLUTIONS TO PROBLEMS

The present invention is defined by the independent claim 1, defining a motor control device.

EFFECTS OF THE INVENTION

According to the invention, it is possible to reduce a harmonic loss in overmodulation drive of asynchronous PWM control without increasing the number of times of switching. In this way, it is possible to obtain effects such as a high output of an AC motor, miniaturization of a cooling system, etc.

BRIEF DESCRIPTION OF THE DRAWINGS

Fig. 1 is a configuration diagram of a motor control device in Embodiment 1.
Fig. 2 is an element diagram of the motor control device.
Fig. 3A-D illustrates a pulse pattern according to synchronous PWM control of a conventional technology.
Fig. 4A-C illustrates a pulse pattern corresponding to a case of different modulation according to synchronous PWM control of the conventional technology.
Fig. 5A-B illustrates a pulse pattern of synchronous PWM control and asynchronous PWM control of the conventional technology.
Fig. 6 illustrates a loss coefficient.
Fig. 7 illustrates periodicity of asynchronous PWM control.
Fig. 8A-C illustrates a pulse pattern of the invention.
Fig. 9A-B illustrates a restriction on a switching width.
Fig. 10A-D illustrates an effect of the invention.
Fig. 11 is a configuration diagram of Embodiment 2.

MODE FOR CARRYING OUT THE INVENTION

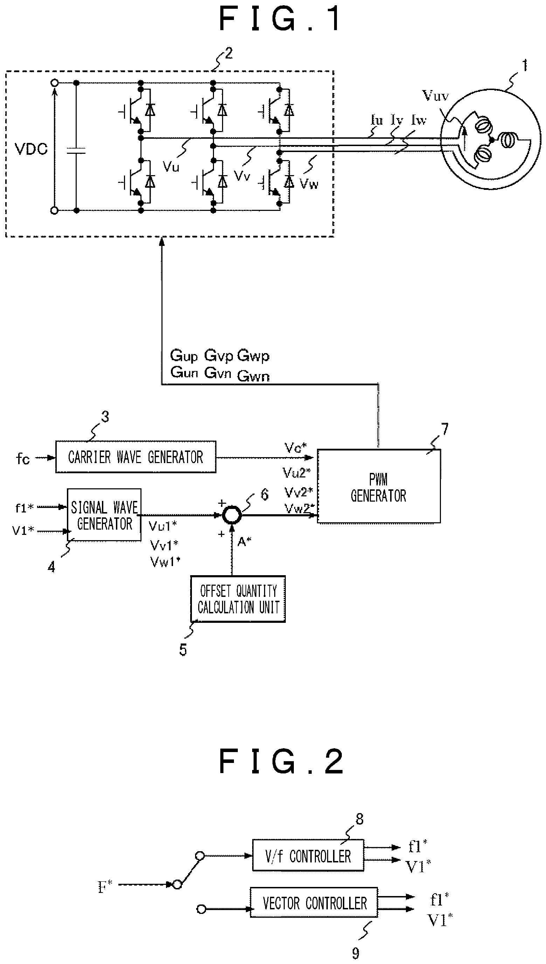

Embodiment 1 will be described with reference to Fig. 1 to Fig. 10A-D and Table 1.

Embodiment 1

Fig. 1 is a configuration diagram of a motor control device in Embodiment 1. Fig. 2 illustrates elements of a system. In response to pulse voltages (a U-phase pulse voltage Vu, a V-phase pulse voltage Vv, and a W-phase pulse voltage Vw) applied by an inverter 2, a three-phase alternating current (U-phase current Iu, V-phase current Iv, and W-phase current Iw) flows through an AC motor 1, and the AC motor 1 is driven at a drive frequency f. Here, a voltage applied between U and V phases of the AC motor 1 is referred to as a line voltage Vuv.

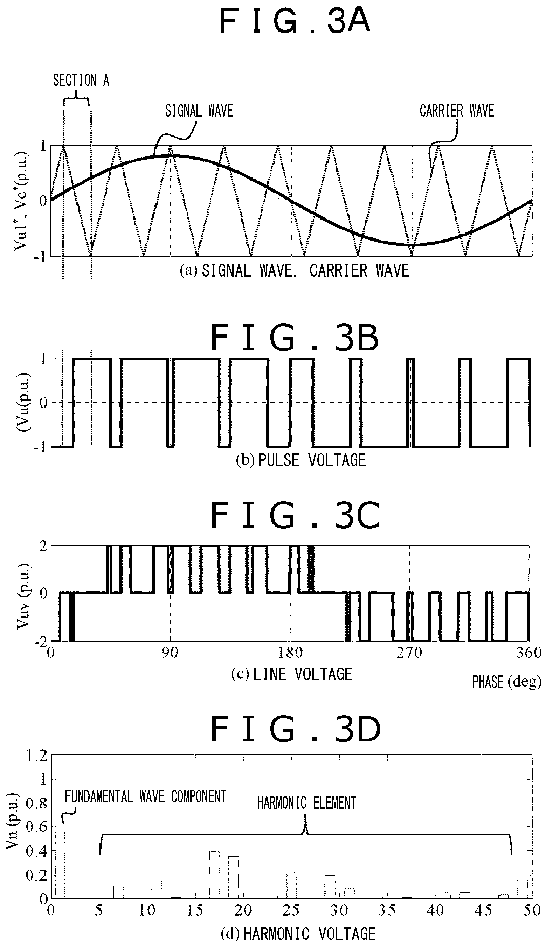

A carrier wave generator 3 generates a carrier wave Vc* based on a carrier frequency fc. As shown in Fig. 3A, the carrier wave Vc* is a triangular wave having an amplitude 1 (normalized by a half VDC/2 of a direct current (DC) voltage) and a frequency fc.

A signal wave generator 4 generates a signal wave (a U phase signal wave Vu1*, a V-phase signal wave Vv1*, and a W phase signal wave Vw1*) based on a frequency command f1* and a voltage command V1*. The signal wave is a sine wave having a frequency f1* as illustrated in Fig. 3A, and an amplitude thereof is equivalent to the voltage command V1*. The frequency command f1* and the voltage command V1* are determined based on a speed command F* by a V/f controller 8 or a vector controller 9 illustrated in Fig. 2. Here, an amplitude ratio of a signal wave and a carrier wave is referred to as modulation Kh.

An offset quantity calculation unit 5 calculates an offset quantity A* of the signal wave, and outputs the calculated offset quantity A* to an addition unit 6.

The addition unit 6 generates correction signal waves Vu2*, V2*, and Vw2* described below by adding the offset quantity A* to the signal wave.

A PWM generator 7 generates gate signals Gun, Gup, Gvn, Gvp, Gwn, and Gwv by comparing the correction signal waves Vu2*, Vv2*, and Vw2* with the carrier wave, and outputs the generated gate signals to the inverter 2. The inverter 2 performs ON/OFF control of a switching element based on the gate signals, and applies a pulse voltage to the AC motor 1. Hereinafter, a waveform diagram of the pulse voltage will be referred to as a pulse pattern.

Next, a description will be given of an operation principle of PWM control and a harmonic loss corresponding to a problem.

The carrier wave generator 3, the signal wave generator 4, and the PWM generator 7 implement PWM control. PWM control is means for converting a DC voltage VDC to an arbitrary voltage/frequency, and is indispensable for variable speed drive. In PWM control, the switching element is determined to be turned ON/OFF by comparing amplitudes of the signal wave and the carrier wave illustrated in Fig. 3A. For example, when the signal wave is smaller than the carrier wave as illustrated in Fig. 3A, the pulse voltage Vu is turned OFF. When the carrier frequency is sufficiently high, fundamental frequencies and amplitudes of the pulse voltages Vu, Vv, and Vw are equivalent to those of an original signal wave. Therefore, when the pulse voltages Vu, Vv, and Vw are applied to the AC motor 1, the AC motor 1 is driven at a drive frequency f = f1* when the AC motor 1 is a synchronous machine and is driven at f = f1* - fs (fs: slip frequency) when the AC motor 1 is an induction machine. The operation principle of PWM control has been described above.

Next, a description will be given of the harmonic loss corresponding to a problem of PWM control. In PWM control, distortion occurs in the voltage/current in response to an ON/OFF operation of the switching element of the inverter 2. This distortion may be expressed as a harmonic element illustrated in Fig. 3D, which causes a harmonic loss. In particular, it has been known that harmonic elements and harmonic losses remarkably increase in overmodulation drive of asynchronous PWM control.

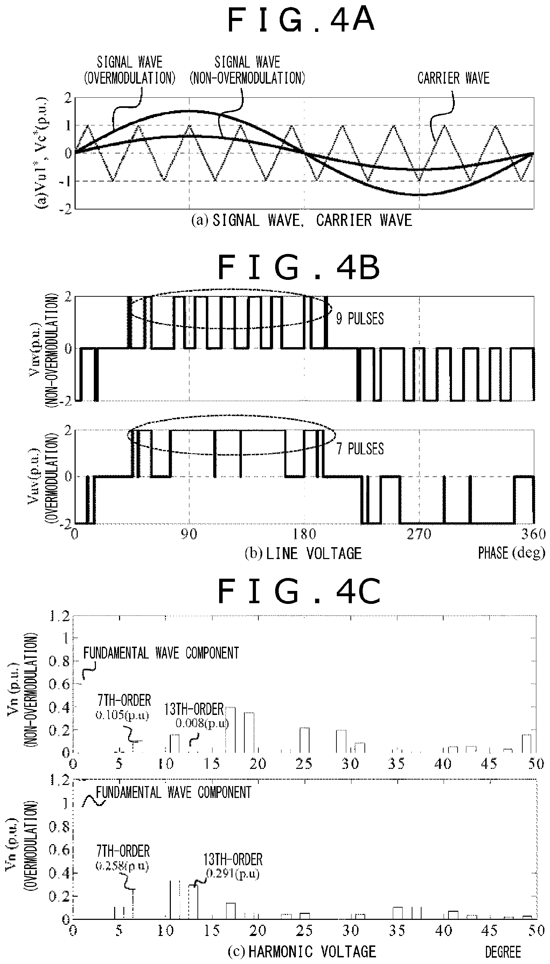

Overmodulation corresponds to modulation Kh exceeding 1 (p.u.). Fig. 4A-C illustrates pulse patterns in the case of overmodulation and in the case of non-overmodulation. As illustrated in Fig. 4B, in the case of overmodulation, the number of pulses for one period of the fundamental wave is reduced when compared to the case of non-overmodulation since the signal wave is larger than the carrier wave at phases of 90 deg and 270 deg which are peaks thereof, and the pulse voltage is connected. As a result, an effective value of the harmonic element increases and the harmonic loss increases. For example, as illustrated in Fig. 4C, a 7th-order voltage harmonic is 0.105 p.u. in non-overmodulation and is 0.258 p.u. in overmodulation, which is approximately doubled. In addition, a 13th-order voltage harmonic is 0.008 p.u. in non-overmodulation and is 0.291 p.u. in overmodulation, which is approximately 30 times. As described above, overmodulation has a problem that harmonic elements increase.

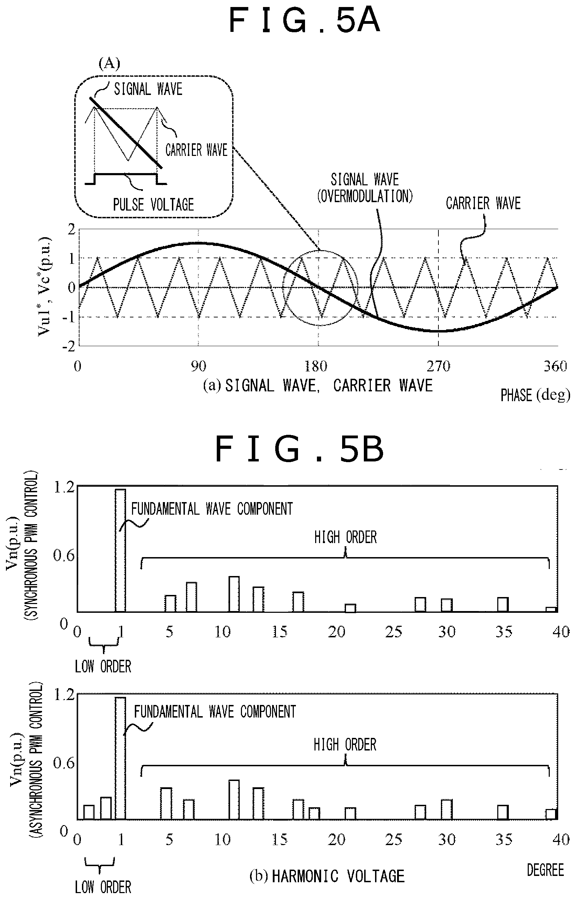

Asynchronous PWM control is a PWM control scheme of fixing the carrier frequency regardless of the fundamental frequency (drive frequency) of the motor. Meanwhile, synchronous PWM control is a scheme of adjusting the carrier frequency to an integral multiple of a fundamental frequency. Fig. 5A-B illustrates a pulse pattern in the case in which each of asynchronous PWM control and synchronous PWM control is overmodulation-driven. In synchronous PWM control, as illustrated in Fig. 5B, only a high-order harmonic element is present, and any low-order harmonic element is not present since the fundamental wave and the carrier wave are in synchronization, and synchronous PWM control has periodicity based on one period of the fundamental wave. On the other hand, in asynchronous PWM control, a low-order harmonic element is generated since the fundamental wave and the carrier wave are not in synchronization, and a switching phase of the pulse voltage varies for each period of the fundamental wave in asynchronous PWM control, which is referred to as a phase error of the pulse voltage in Patent Document 1. As illustrated in Fig. 5A, the phase error occurs around a phase (0 deg and 180 deg) at which a slope of the signal wave is large. As described above, in asynchronous PWM control, a low-order harmonic element is present to cause a harmonic loss along with a high-order harmonic element.

The harmonic loss is a sum of an eddy current generated in a magnet of the AC motor 1, a hysteresis loss generated in a magnetic steel sheet, etc. These harmonic losses are proportional to a square of a current harmonic In of ( Equation 1) and are proportional to a factorial of a frequency as shown in Table 1. Hence, the harmonic loss Wh is approximated by (Equation 2) using a period T described below.

[Equation 1]

$$I_n = \frac{V_n}{Z} = \frac{V_n}{2\pi f_1 L n} \propto \frac{V_n}{n} \dots\dots\dots\dots\dots\dots\dots \quad \text{(Equation 1)}$$

where Z: an impedance of the AC motor 1, L: an inductance of the AC motor 1, Vn: harmonic voltage, n: harmonic order.

[Equation 2]

$$W_h = \sum_{\frac{1}{T}<n<H} I_n^2 n^K \propto \sum_{\frac{1}{T}<n<H} V_n^2 n^{K-2} \dots\dots\dots\dots\dots\dots\dots \quad \text{(Equation 2)}$$

where K: a loss coefficient, H: an upper limit of a harmonic order.

Here, the loss coefficient K is a coefficient that represents a characteristic of the harmonic loss Wh of the AC motor 1. The loss coefficient K is determined as below based on main factors (Table 1) of the harmonic loss of the AC motor 1.

    (1) K = 0: a case in which there is no frequency dependence, and a copper loss is a main factor
    (2) K = 1: a case in which a hysteresis loss is a main factor
    (3) K = 2: a case in which an eddy-current loss is a main factor

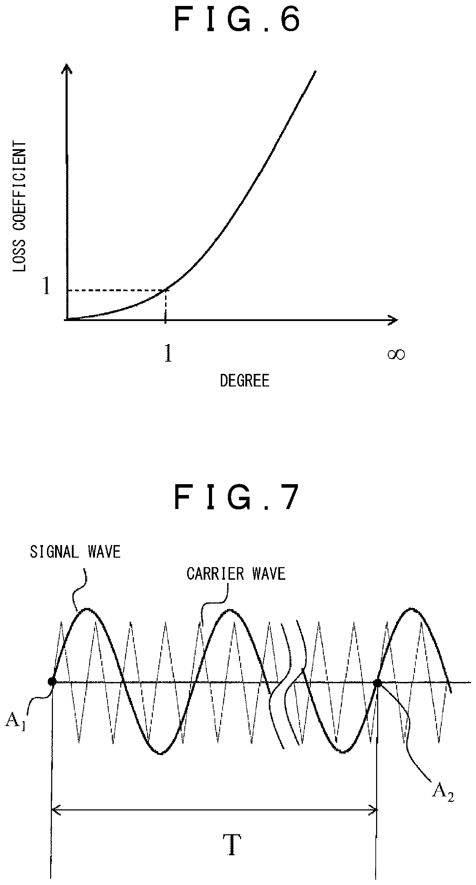

As a result, the loss coefficient Kn is a value greater than or equal to 0 and less than or equal to 2, and has a positive correlation as illustrated in Fig. 6. The cause and the characteristic of the harmonic loss corresponding to a problem of PWM control have been described above.

[Table 1]

[Table 1]

| Type | Degree of frequency |
| --- | --- |
| Hysteresis loss of magnetic steel sheet | First order |
| Eddy-current loss of magnetic steel sheet | Second order |
| Eddy-current loss of magnet | Second order |

In the present embodiment, the harmonic loss Wh of (Equation 2) is reduced or minimized using the offset calculation unit 5 and the addition unit 6. A principle thereof will be described below.

Since the loss coefficient Kn has a positive correlation, reducing a high-order harmonic voltage Vn is effective in reducing or minimizing the harmonic loss Wh of (Equation 2) even though an increase in a low-order harmonic voltage Vn is permitted. The harmonic voltage Vn is an effective value of the harmonic element determined by the pulse pattern. Since a period of the pulse pattern matches one period of the fundamental wave in synchronous PWM control, the harmonic voltage Vn is calculated on the basis of the one period of the fundamental wave. In asynchronous PWM control, the period of the pulse pattern does not match one period of the fundamental wave and matches a period T corresponding to a least common multiple of a period T1 of a signal wave illustrated in Fig. 7 and a period Tc of the carrier wave, which is expressed by (Equation 3). In the invention, since asynchronous PWM control is treated, the harmonic voltage Vn is calculated based on a period T of (Equation 3).

[Equation 3]

$$T = n_1 T_1 = n_2 T_c \quad \cdots\cdots\cdots\cdots\cdots\cdots\cdots\cdots\cdots\cdots\cdots\cdots\cdots\cdots \quad \text{(Equation 3)}$$

where n1 and n2 are integers.

The harmonic voltage Vn depends on a phase $\alpha k$ (hereinafter a switching phase angle $\alpha k$) at which the pulse voltage switches as shown in (Equation 4). Therefore, a desired harmonic voltage Vn is obtained by adjusting the switching phase angle $\alpha k$. For this reason, (Equation 2) is substituted into (Equation 4), and obtained (Equation 5) is set as an objective function. The harmonic loss Wh may be reduced or minimized by adjusting the switching phase angle $\alpha k$ such that the objective function is reduced or minimized.

[Equation 4]

$$V_n = \frac{2}{n\pi} \sqrt{\left( \sum_{k=1}^{N} (-1)^k \cos n\alpha_k \right)^2 + \left( \sum_{k=1}^{N} (-1)^k \sin n\alpha_k \right)^2} \quad \cdots\cdots\cdots\cdots\cdots \quad \text{(Equation 4)}$$

where N: an upper limit of a harmonic order.

[Equation 5]

$$W_h \propto \sum_{\frac{1}{T}<n<H} V_n^2 n^{K-2} = \frac{4}{\pi^2} \sum_{\frac{1}{T}<n<H} \left\{ \left( \sum_{k=1}^{N} (-1)^k \cos n\alpha_k \right)^2 + \left( \sum_{k=1}^{N} (-1)^k \sin n\alpha_k \right)^2 \right\} n^{K-4} \cdot \cdot$$

(Equation 5)

According to a principle of PWM control, it is necessary to fix an amplitude V1 and a phase θ1, which are fundamental wave components of the pulse voltage, in adjustment of the switching phase angle αk. The amplitude V1 and θ1 of the fundamental wave may be expressed as shown in (Equation 6) and (Equation 7) using the switching phase angle αk. For this reason, in the invention, it is necessary to set the switching phase angle αk at which (Equation 6) and (Equation 7) are kept constant.

[Equation 6]

$$V_1 = \frac{2}{n\pi} \sqrt{\left( \sum_{k=1}^{N} (-1)^k \cos n\alpha_k \right)^2 + \left( \sum_{k=1}^{N} (-1)^k \sin n\alpha_k \right)^2} \cdots \cdots \cdots \cdots \cdots$$

(Equation 6)

[Equation 7]

$$\theta_1 = \tan^{-1} \left( \frac{-\sum_{k=1}^{N} (-1)^k \sin \alpha_k}{\sum_{k=1}^{N} (-1)^k \cos \alpha_k} \right) \cdots \cdots \cdots \cdots \cdots \cdots \cdots \cdots \cdots$$

(Equation 7)

In the present embodiment, the offset calculation unit 5 calculates the offset quantity A* to adjust the switching phase angle αk, and the addition unit 6 performs offset correction on the signal wave based thereon. A procedure of this embodiment will be described below.

(1) A value of the objective function (Equation 5) is set according to a driving condition of the AC motor 1.
(2) The switching phase angle αk is changed.
(3) The switching phase angle αk is substituted into (Equation 5) and calculated.
(4) A procedure of (2) and (3) is repeated until the value set in item (1) is obtained.
(5) The offset quantity A* of the signal wave is calculated based on the switching phase angle αk.
(6) Offset correction is performed within one period of the carrier wave including phases 90 deg and 270 deg at which the amplitude of the signal wave peaks and phases 0 deg and 180 deg at which the slope is large (hereinafter a peak phase region and a zero cross phase region) using the offset quantity A* to generate the correction signal waves Vu2*, V2*, and Vw2* illustrated in Fig. 1.
(7) A pulse voltage is generated based on the correction signal waves and the carrier wave and applied to the AC motor 1.

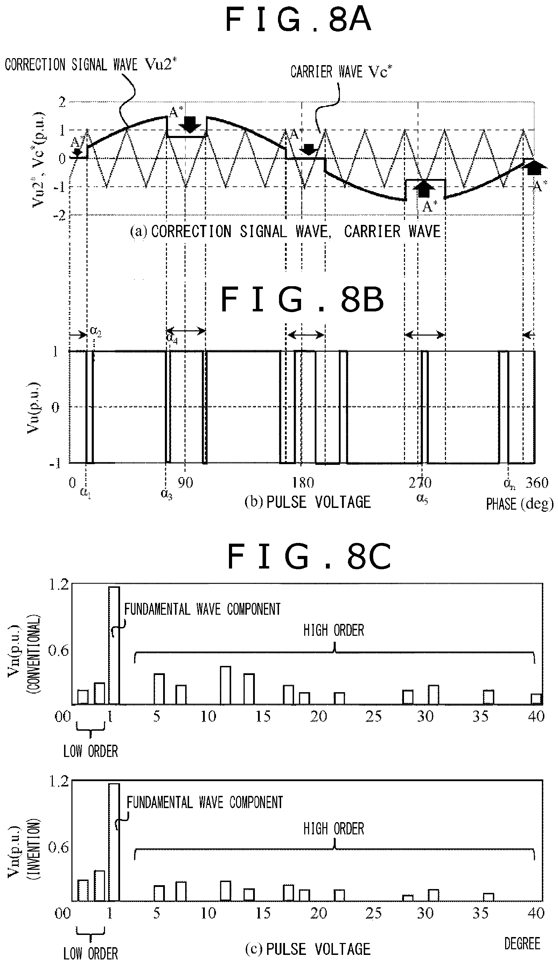

A pulse pattern generated by the above procedure is illustrated in Fig. 8A-C. As a result, since the high-order harmonic voltage Vn may be reduced while fixing the fundamental wave component as illustrated in Fig. 8C, the harmonic loss Wh shown in (Equation 2) may be reduced.

As described above, in the present embodiment, the harmonic loss Wh may be reduced or minimized. Hereinafter, the invention will be elaborated.

The whole calculation of the offset quantity A* may not be performed, and a part thereof may be omitted. For example, the offset quantity A* is set to 0 when

(1) modulation Kh < 1
(2) the carrier frequency fc is synchronized with the fundamental frequency f1

since the harmonic loss is small in the above cases. A computation load of a microcomputer is reduced by omitting some functions under the above-mentioned conditions.

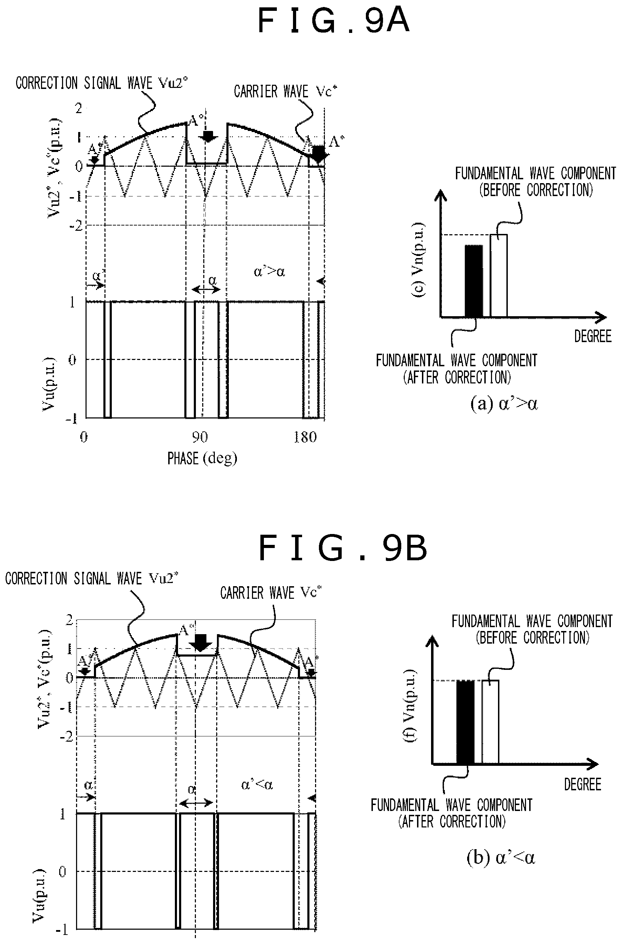

Fig. 9A-B illustrates a relation between a switching width $\alpha'$ in the zero cross phase region and a switching width $\alpha$ in the peak phase region. From Fig. 9A and Fig. 9B, the switching phase angle $\alpha k$ needs to be set to have a relation of (Equation 8) in order to fix a fundamental wave amplitude A.

[Equation 8]

$$\alpha' < \alpha \quad \cdots\cdots\cdots\cdots\cdots\cdots\cdots\cdots\cdots\cdots\cdots\cdots\cdots\cdots\cdots\cdots\cdots\cdots \qquad \text{(Equation 8)}$$

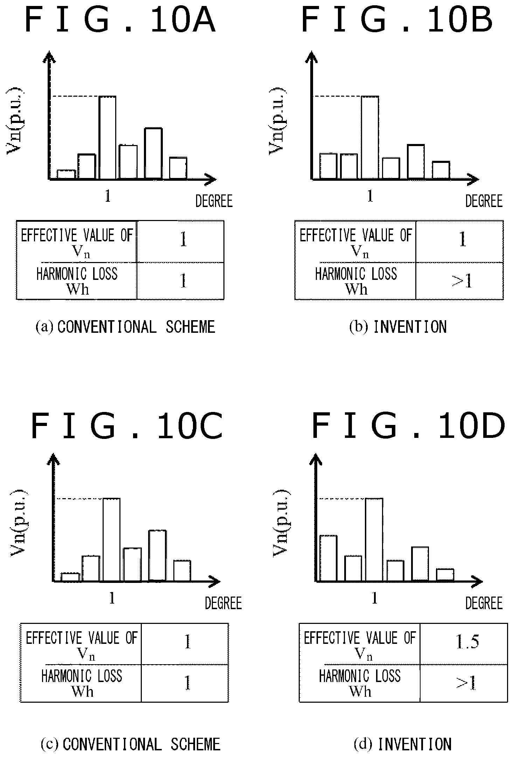

Fig. 10A-D illustrates an effect of the present embodiment. In Fig. 10A and Fig. 10B, the harmonic loss Wh may be reduced despite the fact that the harmonic voltage Vn is equal between a conventional scheme and the invention. In addition, in Fig. 10C and Fig. 10D, the harmonic loss Wh may be reduced despite an increase in the effective value of the harmonic voltage Vn.

Embodiment 2

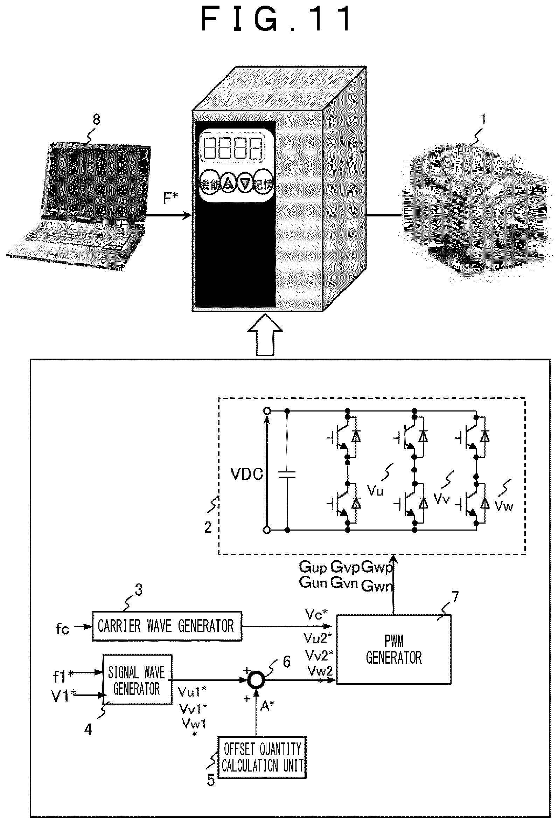

Fig. 11 is a configuration diagram of Embodiment 2. In the present embodiment, the AC motor 1 of Embodiment 1 is applied to a drive system. In Fig. 11, description of the same parts as those of Embodiment 1 will be omitted. In the present embodiment, the speed command F* may be set by a host device such as a computer 10.

The present embodiment may implement a high-accuracy speed control characteristic.

REFERENCE SIGNS LIST

1... AC motor
2... inverter
3... carrier wave generator
4... signal wave generator
5... offset quantity calculation unit
6... addition unit
7... PWM generator
8... V/f controller
9... vector controller
10... computer
VDC... DC voltage
Vu, Vv, Vw... U-phase pulse voltage, V-phase pulse voltage, W-phase pulse voltage
Vu1*, Vv1*, Vw1*... U-phase signal wave, V-phase signal wave, W-phase signal wave
Vuv... line voltage
Vu2*, Vv2*, Vw2*... U-phase correction signal wave, V-phase correction signal wave, W-phase correction signal wave
Vc*... carrier wave
V1*... voltage command
Vn... harmonic voltage
Guu, Gup... U-phase gate signal
Gvu, Gvp... V-phase gate signal
Gwu, Gwp... W-phase gate signal
θ... voltage phase
F*... speed command
f1*... frequency command
f... drive frequency
fc... carrier wave frequency
Iu, Iv, Iw... U-phase current, V-phase current, W-phase current
Tc... carrier wave period
T1... signal wave period
T... period corresponding to least common multiple of carrier wave and signal wave
In... current harmonic

Z... impedance of AC motor
L... inductance of AC motor
K... loss coefficient
n... harmonic order
Wh... harmonic loss
V1... fundamental wave amplitude
θ1... fundamental wave phase
A*... offset quantity
αk... switching phase angle

## Claims

1. A motor control device for overmodulation-driving an AC motor (1) comprising:

   a signal wave generator (4) that is configured to generate a signal wave (Vu1*, Vv1*, Vw1*) based on a frequency command (f1*) and a voltage command (V1*);
   an offset quantity calculation unit (5) that is configured to calculate an offset quantity (A*) of the signal wave based on a switching phase angle (αk) at which a pulse voltage switches and outputs said offset quantity (A*) of the signal wave to an addition unit (6); wherein
   the offset quantity calculation unit (5) is configured to calculate the offset quantity (A*) of the signal wave to reduce or minimise a harmonic loss by being configured:

   to set a value of an objective function of the following equation for the harmonic loss (Wh) according to the driving condition of the AC motor (1)

   $$W_h \propto \sum_{\frac{1}{T} < n < H} V_n^2 n^{K-2} = \frac{4}{\pi^2} \sum_{\frac{1}{T} < n < H} \left\{ \left( \sum_{k=1}^{N} (-1)^k \cos n\alpha_k \right)^2 + \left( \sum_{k=1}^{N} (-1)^k \sin n\alpha_k \right)^2 \right\} n^{K-4} \quad ,$$

   where in the equation above T is the period corresponding to the least common multiple of the carrier wave and signal wave, $V_n$ is the harmonic voltage, n is the harmonic order, K is a loss coefficient, H is an upper limit of harmonic order, $\alpha_k$ is the switching phase angle,
   to set a switching phase angle (αk), at which a pulse voltage switches, such that a fundamental wave amplitude (V1) and a fundamental wave phase (θ1) of the pulse voltage are kept constant to fix an effective value of the fundamental wave,
   to input the set switching phase angle (αk) into the equation to obtain a value of the objective function, and if the obtained value of the objective function is not the set value of the objective function, then to change the switching phase angle (αk) and to input the changed switching phase angle (αk) into the equation above and to repeat this process until the set value of the objective function is obtained;

   the addition unit (6) that is configured to receive the offset quantity (A*) of the signal wave and to add the offset quantity (A*) to the signal wave (Vu1*, Vv1*, Vw1*) is configured to perform offset correction on the signal wave (Vu1*, Vv1*, Vw1*) to generate a corrected signal wave (Vu2*, Vv2*, Vw2*), wherein
   the addition unit (6) is configured to add the offset quantity (A*) to the signal wave (Vu1*, Vv1*, Vw1*) in one carrier period (Tc) including voltage phases 0, 90, 180, and 270 deg to increase an effective value of a harmonic whose degree is lower than the degree of the fundamental wave, and to reduce an effective value of a harmonic whose degree is higher than a degree of the fundamental wave; and

   wherein the motor control device further comprises:

   a carrier wave generator (3) that is configured to generate a carrier wave (Vc*) based on a fixed carrier frequency (fc);
   a PWM generator (7) that is configured to compare the corrected signal wave (Vu2*, Vv2*, Vw2*) and the carrier wave (Vc*) to output a gate signal (Gun Gup, Gvn, Gvp, Gwn, Gwv); and

an inverter (2) that is configured to control switching elements based on the gate signal (Gun Gup, Gvn, Gvp, Gwn, Gwv) to apply a pulse voltage to the motor (1), wherein
the pulse voltage is applied to the AC motor (1) based on the corrected signal waves (Vu2*, Vv2*, Vw2*) and the carrier wave.

**2.** The motor control device according to claim 1, wherein the offset quantity calculation unit (5) is configured to calculate an effective value of a harmonic based on a period T corresponding to a least common multiple of periods of the signal wave and the carrier wave to calculate the offset quantity (A*).

**3.** The motor control device according to claim 1, wherein the offset quantity calculation unit (5) is configured to set the switching phase angle ($\alpha$k) such that a switching width in one carrier wave period (Tc) including 90 and 270 deg is larger than a switching width in one carrier wave period (Tc) including 0 and 180 deg, and switches the pulse voltage.

**Patentansprüche**

**1.** Motorsteuervorrichtung zum übermodulierten Ansteuern eines Wechselstrommotors (1), die Folgendes umfasst:

einen Signalwellengenerator (4), der ausgelegt ist, um eine Signalwelle (Vu1*, Vv1*, Vw1*) basierend auf einem Frequenzbefehl (f1*) und einem Spannungsbefehl (V1*) zu erzeugen;
eine Offsetgrößenberechnungseinheit (5), die ausgelegt ist, um eine Offsetgröße (A*) der Signalwelle basierend auf einem Schaltphasenwinkel ($\alpha$k) zu berechnen, bei dem eine Impulsspannung umschaltet, und die Offsetgröße (A*) der Signalwelle an eine Additionseinheit (6) auszugeben, wobei:

die Offsetgrößenberechnungseinheit (5) ausgelegt ist, um die Offsetgröße (A*) der Signalwelle zu berechnen, um einen Harmonischenverlust zu reduzieren oder zu minimieren, indem sie ausgelegt ist, um:
einen Wert einer Objektfunktion der folgenden Gleichung für den Harmonischenverlust (Wh) gemäß dem Ansteuerungszustand des Wechselstrommotors (1) einzustellen:

$$W_h \propto \sum_{\frac{1}{T}=n \cdot dH} V_n^2 n^{K-2} = \frac{4}{\pi^2} \sum_{\frac{1}{T}=n \cdot dH} \left\{ \left( \sum_{k=1}^{N} (-1)^k \cos n\alpha_k \right)^2 + \left( \sum_{k=1}^{N} (-1)^k \sin n\alpha_k \right)^2 \right\} n^{K-4} ,$$

worin in der obigen Gleichung T die Periode ist, die dem kleinsten gemeinsamen Vielfachen der Trägerwelle und der Signalwelle entspricht, $V_n$ die Spannung der Harmonischen ist, n die Ordnung der Harmonischen ist, K ein Verlustkoeffizient ist, H eine Obergrenze der Ordnung der Harmonischen ist, $\alpha$k der Schaltpha-senwinkel ist,

einen Schaltphasenwinkel ($\alpha$k), bei dem eine Impulsspannung umschaltet, so einzustellen, dass eine Fundamentalwellenamplitude (V1) und eine Fundamentalwellenphase ($\theta$1) der Impulsspannung kon-stant gehalten werden, um einen Effektivwert der Fundamentalwelle zu fixieren,
den eingestellten Schaltphasenwinkel ($\alpha$k) in die Gleichung einzugeben, um einen Wert der Objektfunktion zu erhalten und
falls der erhaltene Wert der Objektfunktion nicht der eingestellte Wert der Objektfunktion ist, dann den Schaltphasenwinkel ($\alpha$k) zu ändern und den geänderten Schaltphasenwinkel ($\alpha$k) in die obige Glei-chung einzusetzen und diesen Vorgang zu wiederholen, bis der eingestellte Wert der Objektfunktion erhalten wird;

die Additionseinheit (6), die ausgelegt ist, um die Offsetgröße (A*) der Signalwelle zu erhalten, und die Offsetgröße (A*) zu der Signalwelle (Vu1*, Vv1*, Vw1*) zu addieren, ausgelegt ist, um eine Offsetkorrektur der Signalwelle (Vu1*, Vv1*, Vw1*) durchzuführen, um eine korrigierte Signalwelle (Vu2*, Vv2*, Vw2*) zu erzeugen, wobei:
die Additionseinheit (6) ausgelegt ist, um die Offsetgröße (A*) in einer Trägerperiode (Tc), einschließlich der Spannungsphasen 0°, 90°, 180° und 270°, zu der Signalwelle (Vu1*, Vv1*, Vw1*) zu addieren, um einen Effektivwert einer Harmonischen, deren Grad niedriger ist als der Grad der Fundamentalwelle, zu erhöhen und um einen Effektivwert der Harmonischen, deren Grad höher ist als ein Grad der Fundamentalwelle, zu reduzieren; und

wobei die Motorsteuervorrichtung ferner Folgendes umfasst:

einen Trägerwellengenerator (3), der ausgelegt ist, um eine Trägerwelle (Vc*) basierend auf einer fixen Trägerfrequenz (fc) zu erzeugen;
einen PWM-Generator (7), der ausgelegt ist, um die korrigierte Signalwelle (Vu2*, Vv2*, Vw2*) und die Trägerwelle (Vc*) zu vergleichen, um ein Gate-Signal (Gun, Gup, Gvn, Gvp, Gwn, Gwv) auszugeben; und
einen Wechselrichter (2), der ausgelegt ist, um Schaltelemente basierend auf dem Gate-Signal (Gun, Gup, Gvn, Gvp, Gwn, Gwv) zu steuern, um den Motor (1) mit einer Impulsspannung zu beaufschlagen, wobei der Wechselstrommotor (1) basierend auf den korrigierten Signalwellen (Vu2*, Vv2*, Vw2*) und der Trägerwelle mit der Impulsspannung beaufschlagt wird.

2. Motorsteuervorrichtung nach Anspruch 1, wobei die Offsetgrößenberechnungseinheit (5) ausgelegt ist, um einen Effektivwert einer Harmonischen basierend auf einer Periode T zu berechnen, die einem kleinsten gemeinsamen Vielfachen von Perioden der Signalwelle und der Trägerwelle entspricht, um die Offsetgröße (A*) zu berechnen.

3. Motorsteuervorrichtung nach Anspruch 1, wobei die Offsetgrößenberechnungseinheit (5) ausgelegt ist, um den Schaltphasenwinkel ($\alpha$k) so einzustellen, dass eine Schaltbreite in einer Trägerwellenperiode (Tc), einschließlich 90° und 270°, größer ist als eine Schaltbreite in einer Trägerwellenperiode (Tc), einschließlich 0° und 180°, und die Impulsspannung schaltet.

**Revendications**

1. Dispositif de commande de moteur destiné à entraîner une surmodulation d'un moteur à courant alternatif (1) comprenant :

un générateur d'onde de signal (4) qui est configuré pour générer une onde de signal (Vu1*, Vv1*, Vw1*) sur la base d'une instruction de fréquence (f1*) et d'une instruction de tension (V1*) ;
une unité de calcul de quantité de décalage (5) qui est configurée pour calculer une quantité de décalage (A*) de l'onde de signal sur la base d'un angle de phase de commutation ($\alpha$k) auquel une tension d'impulsion commute et délivre en sortie ladite quantité de décalage (A*) de l'onde de signal à une unité d'addition (6) ;
dans lequel
l'unité de calcul de quantité de décalage (5) est configurée pour calculer la quantité de décalage (A*) de l'onde de signal afin de réduire ou minimiser une perte harmonique en étant configurée :

pour régler une valeur d'une fonction objective de l'équation suivante pour la perte d'harmonique (Wh) en fonction de la condition d'entraînement du moteur à courant alternatif (1)

$$W_h \propto \sum_{\frac{1}{T} < n < H} V_n^2 n^{K-2} = \frac{4}{\pi^2} \sum_{\frac{1}{T} < n < H} \left\{ \left( \sum_{k=1}^{N} (-1)^k \cos n\alpha_k \right)^2 + \left( \sum_{k=1}^{N} (-1)^k \sin n\alpha_k \right)^2 \right\} n^{K-4}$$

,

où dans l'équation ci-dessus, T est la période correspondant au plus petit commun multiple de l'onde porteuse et de l'onde de signal, Vn, est la tension harmonique, n est l'ordre harmonique, K est un coefficient de perte, H est une limite supérieure d'ordre harmonique, $\alpha$k est l'angle de phase de commutation,
pour régler un angle de phase de commutation ($\alpha$k), auquel une tension d'impulsion commute, de telle sorte qu'une amplitude d'onde fondamentale (V1) et une phase d'onde fondamentale ($\theta$1) de la tension d'impulsion sont maintenues constantes pour fixer une valeur effective de l'onde fondamentale,
pour entrer l'angle de phase de commutation réglé ($\alpha$k) dans l'équation pour obtenir une valeur de la fonction objective, et
si la valeur obtenue de la fonction objective n'est pas la valeur de réglage de la fonction objective, alors pour modifier l'angle de phase de commutation ($\alpha$k) et entrer l'angle de phase de commutation modifié ($\alpha$k) dans l'équation ci-dessus et répéter ce processus jusqu'à ce que la valeur de réglage de la fonction objective soit obtenue ;

l'unité d'addition (6) qui est configurée pour recevoir la quantité de décalage (A*) de l'onde de signal et pour ajouter la quantité de décalage (A*) à l'onde de signal (Vu1*, Vv1*, Vw1*) est configurée pour effectuer une correction de décalage sur l'onde de signal (Vu1*, Vv1*, Vw1*) afin de générer une onde de signal corrigée (Vu2*, Vv2*, Vw2*), dans lequel

l'unité d'addition (6) est configurée pour ajouter la quantité de décalage (A*) à l'onde de signal (Vu1*, Vv1*, Vw1*) dans une période de porteuse (Tc) comprenant des phases de tension 0, 90, 180 et 270 degrés pour augmenter une valeur effective d'une harmonique dont le degré est inférieur au degré de l'onde fondamentale, et pour réduire une valeur effective d'une harmonique dont le degré est supérieur à un degré de l'onde fondamentale ; et

dans lequel le dispositif de commande de moteur comprend en outre :

un générateur d'onde porteuse (3) qui est configuré pour générer une onde porteuse (Vc*) sur la base d'une fréquence de porteuse fixe (fc) ;

un générateur PWM (7) qui est configuré pour comparer l'onde de signal corrigée (Vu2*, Vv2*, Vw2*) et l'onde porteuse (Vc*) afin de délivrer en sortie un signal de grille (Gun Gup, Gvn, Gvp, Gwn, Gwv) ; et

un onduleur (2) qui est configuré pour commander des éléments de commutation sur la base du signal de grille (Gun Gup, Gvn, Gvp, Gwn, Gwv) afin d'appliquer une tension d'impulsion au moteur (1), dans lequel la tension d'impulsion est appliquée au moteur à courant alternatif (1) sur la base des ondes de signal corrigées (Vu2*, Vv2*, Vw2*) et de l'onde porteuse.

2. Dispositif de commande de moteur selon la revendication 1, dans lequel l'unité de calcul de quantité de décalage (5) est configurée pour calculer une valeur effective d'une harmonique sur la base d'une période T correspondant à un plus petit commun multiple de périodes de l'onde de signal et de l'onde porteuse pour calculer la quantité de décalage (A*).

3. Dispositif de commande de moteur selon la revendication 1, dans lequel l'unité de calcul de quantité de décalage (5) est configurée pour régler l'angle de phase de commutation ($\alpha$k) de telle sorte qu'une largeur de commutation dans une période d'onde porteuse (Tc) comprenant 90 et 270 degrés est supérieure à une largeur de commutation dans une période d'onde porteuse (Tc) comprenant 0 et 180 degrés, et commute la tension d'impulsion.

# FIG.1

# FIG.2

# F I G . 3A

(a) SIGNAL WAVE, CARRIER WAVE

# F I G . 3B

(b) PULSE VOLTAGE

# F I G . 3C

(c) LINE VOLTAGE

PHASE (deg)

# F I G . 3D

(d) HARMONIC VOLTAGE

# FIG.4A

SIGNAL WAVE
(OVERMODULATION)

SIGNAL WAVE
(NON-OVERMODULATION)

CARRIER WAVE

(a) SIGNAL WAVE, CARRIER WAVE

# FIG.4B

9 PULSES

7 PULSES

(b) LINE VOLTAGE          PHASE (deg)

# FIG.4C

FUNDAMENTAL WAVE COMPONENT

7TH-ORDER
0.105(p.u)

13TH-ORDER
0.008(p.u)

FUNDAMENTAL WAVE COMPONENT

7TH-ORDER
0.258(p.u)

13TH-ORDER
0.291(p.u)

(c) HARMONIC VOLTAGE          DEGREE

# FIG.5A

(A)

SIGNAL WAVE

CARRIER WAVE

PULSE VOLTAGE

SIGNAL WAVE
(OVERMODULATION)

CARRIER WAVE

(a) SIGNAL WAVE, CARRIER WAVE

PHASE (deg)

# FIG.5B

Vn(p.u.)
(SYNCHRONOUS PWM CONTROL)

FUNDAMENTAL WAVE COMPONENT

HIGH ORDER

LOW ORDER

Vn(p.u.)
(ASYNCHRONOUS PWM CONTROL)

FUNDAMENTAL WAVE COMPONENT

HIGH ORDER

LOW ORDER

(b) HARMONIC VOLTAGE

DEGREE

# FIG.6

# FIG.7

# FIG.8A

CORRECTION SIGNAL WAVE Vu2*

CARRIER WAVE Vc*

(a) CORRECTION SIGNAL WAVE, CARRIER WAVE

Vu2*, Vc*(p.u.)

# FIG.8B

Vu(p.u.)

$\alpha_2$

$\alpha_4$

(b) PULSE VOLTAGE

0  $\alpha_1$    $\alpha_3$  90    180    270    $\alpha_n$ 360

$\alpha_5$    PHASE (deg)

# FIG.8C

Vn(p.u.) (CONVENTIONAL)

FUNDAMENTAL WAVE COMPONENT

HIGH ORDER

LOW ORDER

Vn(p.u.) (INVENTION)

FUNDAMENTAL WAVE COMPONENT

HIGH ORDER

LOW ORDER

(c) PULSE VOLTAGE

DEGREE

# FIG.9A

CORRECTION SIGNAL WAVE Vu2*

CARRIER WAVE Vc*

Vu2*, Vc*(p.u.)

Vu(p.u.)

α'>α

0          90          180

PHASE (deg)

FUNDAMENTAL WAVE COMPONENT
(BEFORE CORRECTION)

(c) Vn(p.u.)

DEGREE

FUNDAMENTAL WAVE COMPONENT
(AFTER CORRECTION)

(a) α'>α

# FIG.9B

CORRECTION SIGNAL WAVE Vu2*

CARRIER WAVE Vc*

Vu2*, Vc*(p.u.)

Vu(p.u.)

α'<α

FUNDAMENTAL WAVE COMPONENT
(BEFORE CORRECTION)

(f) Vn(p.u.)

DEGREE

FUNDAMENTAL WAVE COMPONENT
(AFTER CORRECTION)

(b) α'<α

# FIG.10A

| EFFECTIVE VALUE OF $V_n$ | 1 |
|---|---|
| HARMONIC LOSS Wh | 1 |

(a) CONVENTIONAL SCHEME

# FIG.10B

| EFFECTIVE VALUE OF $V_n$ | 1 |
|---|---|
| HARMONIC LOSS Wh | >1 |

(b) INVENTION

# FIG.10C

| EFFECTIVE VALUE OF $V_n$ | 1 |
|---|---|
| HARMONIC LOSS Wh | 1 |

(c) CONVENTIONAL SCHEME

# FIG.10D

| EFFECTIVE VALUE OF $V_n$ | 1.5 |
|---|---|
| HARMONIC LOSS Wh | >1 |

(d) INVENTION

# F I G . 1 1

**EP 3 276 820 B1**

**REFERENCES CITED IN THE DESCRIPTION**

**Patent documents cited in the description**

- WO 2011135695 A1
- JP 2007143316 A
- JP 5615468 B